Europäisches Patentamt

European Patent Office

Office européen des brevets

(19)

(11) Veröffentlichungsnummer: **0 040 268**
**B1**

(12) **EUROPÄISCHE PATENTSCHRIFT**

(45) Veröffentlichungstag der Patentschrift:
02.05.85

(21) Anmeldenummer: **80200462.2**

(22) Anmeldetag: **19.05.80**

(51) Int. Cl.⁴: **F 16 L 27/04**, F 16 L 27/10,
F 16 L 51/02

(54) **Axial- und radialbewegliche Rohrkupplung.**

(43) Veröffentlichungstag der Anmeldung:
**25.11.81 Patentblatt 81/47**

(45) Bekanntmachung des Hinweises auf die Patenterteilung:
**02.05.85 Patentblatt 85/18**

(84) Benannte Vertragsstaaten:
**CH DE FR GB LI**

(56) Entgegenhaltungen:
**DE - C - 337 119**
**FR - A - 1 306 389**
**US - A - 2 242 604**
**US - A - 4 087 323**

(73) Patentinhaber: **BBC Aktiengesellschaft Brown, Boveri & Cie., Haselstrasse, CH-5401 Baden (CH)**

(72) Erfinder: **Beckershoff, Wolfgang, Simonweg 2, CH-5415 Nussbaumen AG (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Die vorliegende Erfindung betrifft eine axial- und radialbewegliche Rohrkupplung gemäss dem Oberbegriff des Patentanspruches 1.

Wegen der in Gasturbinen notwendigen Dehnungsspalte zwischen allen hochwarmfesten Einzelteilen, die mit dem Prozessgas in Berührung stehen, welche je nach Betriebszustand zwischen dem Anfahren und Abstellen variieren, erfordert auch die leckagefreie Zu- und Ableitung von Kühlmitteln einen grossen technischen Aufwand. Dabei ist es gleichgültig, ob als Kühlmittel Luft, ein gasförmiges oder ein flüssiges Kühlmedium verwendet wird.

Zur Kühlung der Begrenzungsflächen des Gaskanals, d.h. der Schaufelfussplatten, der Wärmestausegmente und Einlaufsegmente wird neuerdings die Prallkühlung mit Luft als Kühlmedium verwendet. Jedoch sind für die Kühlung grösserer Flächen bei extremen Gastemperaturen zur Abfuhr der erwärmten Kühlluft recht aufwendige Massnahmen notwendig, zu welchen das teilweise Überbrücken der Abluftschichtdicke mittels Röhrchen oder ein Dreischichtensystem mit insgesamt vier Wänden, bei welchem Abluftdüsen und Frischluftdüsen alternierend angeordnet sind, gehört.

Aus der DE-C-337 119 ist eine Rohrverbindung bekannt geworden, welche zweiteilig ausgebildet ist und bei welcher die beiden axial ineinander geführten Rohrteile gleitend gelagert sind und mittels einer Druckfeder die beiden kugelig ausgebildeten Enden gegen hohlkugelig ausgebildete Dichtflächen der Maschinenteile gedrückt werden.

Diese Ausbildung stellt an sich eine reine Rohrverbindung dar, wobei eine absolute Abdichtung schwer oder fast nicht zu erzielen ist, und zwar wegen der gleitend ineinander gesteckten Rohrteile. Die dazwischen bestehenden Spalte lassen Leckagen, auch bei nur axialer Bewegung, zu.

Aus der US-A-4 087 323 ist weiterhin eine zum Stand der Technik gemäss dem Oberbegriff des Patentanspruches 1 zu zählende Rohrverbindung bekannt geworden, welche ebenfalls zweiteilig ausgebildet ist und bei welcher die beiden axial ineinander geführten Rohrteile gleitend gelagert sind und mittels einer Druckfeder die beiden kugelig ausgebildeten Enden gegen kegelig ausgebildete Dichtflächen der Maschinenteile gedrückt werden.

Bei dieser bekannten Ausbildung ergibt sich jedoch der Nachteil, dass die beiden Rohrteile nur in Axialrichtung gegeneinander verschiebbar sind. Es besteht keine Abdichtung gegen eventuell auftretende Leckagen an den Enden der ineinander gleitenden Rohrteile.

Weiterhin ist eine Rohrverbindung gemäss der FR-A-1 306 389 so ausgebildet, dass zwei Rohrabschnitte ineinander gleitend gelagert sind, bzw. sind die beiden äusseren Rohrenden mittels eines Faltenbalgs miteinander verbunden.

Dadurch, dass die beiden Rohrabschnitte keine sphärisch ausgebildeten Enden aufweisen, ist eine Winkelbeweglichkeit der Enden der Dichtelemente gegenüber den zu verbindenden Teilen nicht möglich. Der die beiden Rohre überdeckende Faltenbalg erlaubt lediglich eine axiale Verschiebbarkeit.

Es ist Aufgabe der vorliegenden Erfindung, eine Rohrkupplung zu schaffen, durch welche eine vollkommen druckdichte und leckagefreie Kühlmittelverbindung hergestellt werden kann, und welches auch für kreislauffremde Kühlmedien, z.B. Dampf oder Flüssigkeiten verwendbar ist.

Die vorgenannte Aufgabe wird erfindungsgemäss durch das kennzeichnende Merkmal des Patentanspruches 1 gelöst.

Die axial dehnbare Umhüllung mit den halbkugeligen Endstücken und den sphärischen Dichtflächen wird durch das unter höheren Druck als der höchste Prozessdruck stehende Kühlmittel axial gespreizt und die sphärischen Dichtflächen der halbkugeligen Enden werden unter axialer Vorspannung an die kegeligen Dichtflächen der Maschinenteile angepresst, so dass eine vollkommene Abdichtung erzielt wird.

Durch die Ausbildung der Umhüllung als Faltenbalg wird eine weitestgehende Toleranzunempfindlichkeit gewährleistet und Längenveränderungen der Rohrkupplung können sicher ausgeglichen werden.

Durch die Ausbildung gemäss Anspruch 4 ergibt sich sowohl hinsichtlich der Fasenneigung, der Parallelverschiebung der miteinander zu verbindenden Bohrungen, bzw. Kühlmittelübertritte, der Winkellage der Bohrungen zueinander, der Grösse der Kugelradien am Dichtelement und dessen Gesamtlänge sowie der Distanz der Kugelsitze voneinander eine besondere Unempfindlichkeit bezüglich Fertigungstoleranzen. Des weiteren ist durch die Ausbildung der Sitzstellen der Kugelenden in den kegelig ausgebildeten Dichtflächen der Maschinenteile eine grosse Verschleissfreiheit gewährleistet, da selbst eine Bewegung der Dichtflächen zueinander unter hoher Hertz'scher Pressung keine Spielvergrösserung und damit verbundene Leckage verursachen kann, sondern eher eine Verbesserung der Abdichtung durch gegenseitiges, oder auch vorwiegend einseitiges Anpassen der Dichtflächen, insbesondere bei einseitiger Härtung, auftritt.

Ein weiterer Vorteil der einstückigen Ausbildung des Faltenbalges und der halbkugeligen Endstücke ist darin zu sehen, dass dieselbe Ausführung an nahezu allen Übertrittsstellen verwendet werden kann, so dass damit beispielsweise die Kühlmittelübertritte zwischen dem Leitschaufelträger einerseits und den Schaufelfüssen sowie andererseits zu den Wärmestausegmenten einer Gasturbine miteinander verbunden werden können, und weiterhin werden durch Vereinheitlichung der erforderlichen Teile erhebliche Kosteneinsparungen und vereinfachte Lagerhaltung erzielt.

In der Zeichnung ist ein Ausführungsbeispiel des Erfindungsgegenstandes vereinfacht dargestellt.

Es zeigt:

Fig. 1 einen Längsschnitt durch eine erfindungsgemässe Rohrkupplung,

Fig. 2 eine Rohrkupplung gemäss Fig. 1, welche Kühlmittelbohrungen zweier Maschinenteile miteinander verbindet.

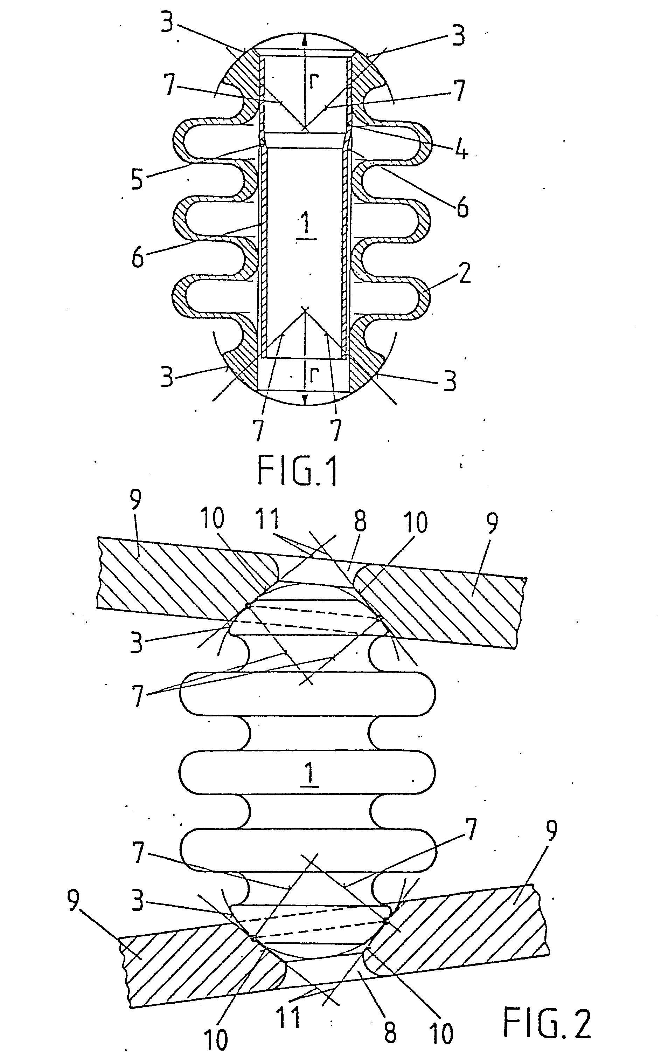

Gemäss Fig. 1 ist mit 1 eine axial- und radialbewegliche Rohrkupplung bezeichnet, welche aus einer von einem Faltenbalg gebildeten Umhüllung 2 mit an deren beiden Enden sphärischen Dichtflächen 3 und einem in einem axialen Durchtritt angeordneten Führungsrohr 4 besteht. Das Führungsrohr 4 ist an einem Ende der Umhüllung 2 mit dieser fest verbunden und ist am entgegengesetzten Ende verkürzt ausgebildet und weist eine Einschnürung 5 auf, durch welche zwischen der Innenoberfläche der Faltenbalgrippen und der Aussenoberfläche des Führungsrohres ein Spalt 6 gebildet wird, so dass sich der Faltenbalg 2 in Axialrichtung frei ausdehnen oder zusammenziehen kann, ohne dass er durch das Führungsrohr in diesen Bewegungen behindert wird. Die sphärischen Dichtflächen 3 weisen einen Radius r auf, der so bemessen ist, dass eine grösstmögliche Verschiebbarkeit der Auflagezone der Dichtflächen 3 leckagefrei ermöglicht wird.

In der Fig. 2 ist die Rohrkupplung 1 im eingebauten Zustand, beispielsweise zwischen zwei mit Bohrungen 8 versehenen Wänden 9 zweier Maschinenteile, gezeigt. Es erfolgt eine Abdichtung der Dichtstelle an den Bohrungen 8 mit deren Dichtflächen 10, die kegelig ausgebildet sind und einen durch die Linien 11 bezeichneten Kegelwinkel aufweisen, der vorzugsweise mit dem durch die Linien 7 bezeichneten Winkel in der Mitte der sphärischen Dichtflächen 3 übereinstimmt. Wie aus der Darstellung ersichtlich, erfolgt noch eine zuverlässige Abdichtung der Dichtstellen an den Bohrungen 8, selbst bei einer stärkeren Neigung der Wände 9, da die kegeligen Dichtflächen 10 der Bohrungen 8 mit den sphärischen Dichtflächen 3 der Rohrkupplung über einen weiten Bereich der sphärischen Dichtflächen 3 in Berührung bleiben. Durch eine axiale Vorspannung der Rohrkupplung 1 wird im eingebauten Zustand gewährleistet, dass die Dichtflächen 3, 10 auch ohne Spreizkraft durch Druckdifferenzen in Kontakt miteinander stehen.

Da die Faltenbälge 2 in ihrer axialen Projektion kreisringförmige Flächen aufweisen, die im Betrieb bei Druckdifferenz zwischen Innen- und Aussenseite in bekannter Weise axiale Spreizkräfte ausüben, werden diese dazu ausgenützt, die Flächenpressung an den Dichtflächen 3, 10 und damit die Sicherheit gegen Leckage im Betrieb zu erhöhen.

Die erfindungsgemässe Rohrkupplung 1 kann selbstverständlich nicht nur zwischen Wandbohrungen, die als Kühlmittelübertritte ausgebildet sind, angeordnet werden, sondern gleichermassen beispielsweise zwischen Wandbohrungen und Büchsen, sowie zwischen einzelnen Rohrenden als Verbindungselement verwendet werden, wobei natürlich die Büchsen- bzw. Rohrenden ebenfalls kegelig ausgebildete Dichtflächen, welche mit den sphärischen Dichtflächen 3 der Dichtelemente 1 übereinstimmen müssen, aufweisen müssen.

**Patentansprüche**

1. Axial- und radialbewegliche Rohrkupplung (1) zur fluidleitenden Verbindung zweier relativ zueinander beweglichen, fluidführenden Maschinenteile (9), vorzugsweise für eine Kühlmediumführung in Wärmekraftmaschinen, insbesondere Gasturbinen, mit zwei axiale Durchtritte aufweisenden halbkugelförmigen Endstücken, deren sphärische Dichtflächen (3) unter Vorspannung gleitend an kegelig um Fluiddurchlässe (8) der Maschinenteile (9) herum angeordneten Gegendichtflächen (10) anliegen, wobei ein zu den Durchlässen koaxiales Führungsrohr (4) einseitig starr mit einem der Endstücke verbunden ist und mit seinem freien Ende axial verschiebbar in den Durchlass des anderen Endstückes eingreift, dadurch gekennzeichnet, dass eine das Führungsrohr (4) mit Abstand umgebende, leckstromfreie und axial dehnbare Umhüllung (2) mit den beiden Endstücken abgedichtet verbunden ist, dass das freie Ende des Führungsrohres (4) mit Spiel in den Durchlass des anderen Endstückes eingreift und dass der zwischen Umhüllung (2) und Führungsrohr (4) gebildete Raum über den durch das Spiel gebildeten Spalt (6) mit dem Fluidpfad durch die Rohrkupplung verbunden ist.

2. Axial- und radialbewegliche Rohrkupplung nach Anspruch 1, dadurch gekennzeichnet, dass das Führungsrohr (4) am berührungsfrei geführten Ende gegenüber der Gesamtlänge der Rohrkupplung verkürzt ausgebildet ist.

3. Axial- und radialbewegliche Rohrkupplung nach Anspruch 1, dadurch gekennzeichnet, dass die axial dehnbare Umhüllung (2) ein Faltenbalg ist.

4. Axial- und radialbewegliche Rohrkupplung nach Anspruch 1, dadurch gekennzeichnet, dass die durch die Berührungslinie zwischen den benachbarten Dichtflächen (3, 10) verlaufenden Radien (7) der sphärischen Dichtflächen (3) einen Winkel einschliessen, der mit dem Kegelwinkel (11) der Gegendichtflächen (10) übereinstimmt.

5. Axial- und radialbewegliche Rohrkupplung nach Anspruch 3, dadurch gekennzeichnet, dass der Faltenbalg (2) und die halbkugeligen Endstücke (3) einstückig ausgebildet sind.

6. Axial- und radialbewegliche Rohrkupplung nach Anspruch 3, dadurch gekennzeichnet, dass das Führungsrohr (4) im Bereich des Faltenbalges (2) eingeschnürt ist.

**Claims**

1. Axially and radially movable pipe coupling (1) for a fluid-conveying connection between two fluid-carrying machine parts (9) movable relative to one another, preferably for a cooling-medium flow in thermal engines, especially gas turbines, with two hemispherical end pieces which have axial passages and the spherical sealing (3) of which rest under prestress, and so as to slide, against matching sealing surfaces (10) arranged conically around fluid passages (8) of the machine parts (9), a guide tube (4) coaxial relative to the passages being connected rigidly to one of the end pieces at one end and by means of its free end engages so as to be axially displaceable into the passage of the other end piece, characterised in that an axially extendable casing (2) surrounding the guide tube (4) at a distance and free of leakage flow is connected to the two end pieces so as to be sealed off, in that the free end of the guide tube (4) engages with play into the passage of the other end piece, and in that the space formed between the casing (2) and the guide tube (4) is connected to the fluid path through the pipe coupling via the gap (6) formed as a result of the play.

2. Axially and radially movable pipe coupling according to Claim 1, characterised in that, at the end guided free of contact, the guide tube (4) is shortened relative to the total length of the pipe coupling.

3. Axially and radially movable pipe coupling according to Claim 1, characterised in that the axially extendable casing (2) is a bellows.

4. Axially and radially movable pipe coupling according to Claim 1, characterised in that the radii (7) of the spherical sealing surfaces (3), these radii passing through the line of contact between the adjacent sealing surfaces (3, 10), form an angle which corresponds to the cone angle (11) of the matching sealing surfaces (10).

5. Axially and radially movable pipe coupling according to Claim 3, characterised in that the bellows (2) and the hemispherical end pieces (3) are made in one piece.

6. Axially and radially movable pipe coupling according to Claim 3, characterised in that the guide tube (4) is contracted in the region of the bellows (2).

**Revendications**

1. Raccord (1) axialement et radialement mobile destiné à raccorder deux pièces de machine (9) mobiles l'une par rapport à l'autre et acheminant du fluide, de préférence pour une circulation d'agent de refroidissement dans des moteurs thermiques, èn particulier des turbines à gaz, comportant deux pièces d'extrémité hémisphériques à orifices axiaux dont les surfaces d'étanchéité sphériques (3) sont appliquées sous précontrainte à coulissement contre des surfaces d'étanchéité de contrepartie (10) qui sont disposées de façon conique autour de passages de fluide (8) des pièces de machine (9), étant entendu qu'un tube de guidage (4) coaxial aux passages est relié d'un côté rigidement à une des pièces d'extrémité et est engagé par son extrémité libre de manière à pouvoir coulisser axialement dans le passage de l'autre pièce d'extrémité, caractérisé en ce qu'une enveloppe (2) à l'épreuve des fuites, axialement dilatable et entourant le tube de guidage (4) tout en étant espacée de celui-ci, est reliée de manière étanche aux deux pièces d'extrémité, l'extrémité libre du tube de guidage (4) s'engage avec un certain jeu dans le passage de l'autre pièce d'extrémité et l'espace formé entre l'enveloppe (2) et le tube de guidage (4) est raccordé par l'intermédiaire de l'interstice (6) formé par le jeu au trajet de fluide traversant le raccord.

2. Raccord axialement et radialement mobile suivant la revendication 1, caractérisé en ce que le tube de guidage (4) est d'une configuration raccourcie, au niveau de son extrémité guidée sans contact, par rapport à la longueur totale du raccord.

3. Raccord axialement et radialement mobile suivant la revendication 1, caractérisé en ce que l'enveloppe axialement dilatable (2) est un soufflet.

4. Raccord axialement et radialement mobile suivant la revendication 1, caractérisé en ce que les rayons (7) des surfaces d'ètanchéité sphériques (3) qui passent par la ligne de contact entre les surfaces d'ètanchéité adjacentes (3, 10) forment un angle inclus qui correspond à l'angle de conicité (11) des surfaces d'étanchéité de contrepartie (10).

5. Raccord axialement et radialement mobile suivant la revendication 3, caractérisé en ce que le soufflet (2) et les pièces d'extrémité hémisphériques (3) sont d'une seule pièce.

6. Raccord axialement et radialement mobile suivant la revendication 3, caractérisé en ce que le tube de guidage (4) est rétréci dans la région du soufflet (2).

0 040 268

FIG.1

FIG.2

5